# EUROPÄISCHE PATENTANMELDUNG

(11) **EP 0 556 419 A1**
(43) Veröffentlichungstag der Anmeldung: **25.08.1993**
(21) Anmeldenummer: 92102636.5
(22) Anmeldetag: 18.02.1992
(51) Int. Cl.: B60J 10/08

(54) **Türabdichtung an Kraftfahrzeugen**

(71) Anmelder: H.P. Chemie Pelzer Research & Development Ltd., Waterford (IE)
(72) Erfinder: Casey, John, Mr., Tramore, County Waterford (IE)
(74) Vertreter: Hilleringmann, Jochen, Dipl.-Ing.

(57) **Zusammenfassung**

Bei einer Türabdichtung an Kraftfahrzeugen, bei der die einzelne Tür 3,4 mit je einem umlaufenden, als Lippendichtung 7 oder biegeweiches Hohlprofil 6 ausgebildeten Dichtstreiten auf dem inneren Türrand und in dem Türrahmen ausgerüstet ist, welche zwischen Tür und Türrahmen umlaufende Hohlräume 9,10 einschließen bzw. einseitig begrenzen, wird bei mindestens einem Hohlraum 9,10 der Abstand zwischen Tür 3,4 und Türrahmen 1 über einen wesentlichen Teil der Erstreckung des Hohlraumes 9,10 senkrecht zur Türaußenfläche 5 durch einen aus wenigstens einem Dichtband 12,13 bestehenden bandförmigen akustischen Absorber im wesentlichen ausgefüllt. Der Absorber besteht aus wenigstens einem Dichtband, vorzugsweise jedoch aus zwei Dichtbändern 12,13. Er ist in seinem örtlichen Querschnitt dem Querschnittsverlauf des Hohlraums 9,10 angepaßt und am Umfang der Tür 3,4 und/oder im Türrahmen 1 befestigt. Bevorzuat ist sein Querschnitt so bemessen, daß sich beim Schließen der Tür 3,4 sein Volumen nicht verkleinert. Die an sich bekannte Lippendichtung 7 an der Tür 3,4 kann auch mit einem der den Absorber bildenden Dichtbänder 12,13 zu einem Abdichtband zusammengefaßt werden.

## Beschreibung

Die Erfindung betrifft eine Türabdichtung an Kraftfahrzeugen, insbesondere an Personenkraftfahrzeugen, bei denen die einzelne Tür mit je einem umlautenden, als Lippendichtung oder biegeweiches Hohlprofil ausgebildeten Dichtstreifen auf dem inneren Türrand und in dem Türrahmen ausgerüstet ist, wobei die Dichtstreifen zwischen Tür und Türrahmen umlaufende Hohlräume zwischen sich einschließen und/oder einseitig begrenzen.

Im Fahrzeugbau, insbesondere im Bau von Personenkraftfahrzeugen hat in relativ kurzer Zeit der Schutz der Fahrzeuginsassen vor in die Fahrzeugkabine eindringendem, von dem eigenen und von fremden Fahrzeugen stammendem Verkehrslärm in erheblichem Umfang an Bedeutung gewonnen. Dabei wurden im bekannten Stand der Technik die Fahrzeugtüren als akustisch undichte Stellen von erheblicher Bedeutung nur ungenügend berücksichtigt.

Zwar sind bei modernen Kraftfahrzeugen die Türen durch Dichtlippen und biegeweiche Hohlprofile - jeweils allein oder in Kombination - gegen eindringende Feuchtigkeit gut abgedichtet, insbesondere bei hohen Fahrgeschwindigkeiten ist jedoch bei praktisch allen auf dem Markt befindlichen Fahrzeugen zu beobachten, daß die Türumrandungen Quellen und Durchtrittsstellen insbesondere für sehr unangenehme hoch- bzw. höherfrequente Geräusche sind.

Aufgabe der Erfindung ist es, Mittel zur Verfügung zu stellen, mit denen diese Geräusche unterdrückt oder doch sehr stark abgeschwächt werden können.

Diese Aufgabe wird, ausaehend von einem Stand der Technik mit einer Türabdichtung an Kraftfahrzeugen, insbesondere an Personenkraftfahrzeugen, bei denen die einzelne Tür mit je einem umlaufenden, als Lippendichtung oder biegeweiches Hohlprofil ausgebildeten Dichtstreifen auf dem inneren Türrand und in dem Türrahmen ausgerüstet ist, wobei die Dichtstreifen zwischen Tür und Türrahmen umlaufende Hohlräume zwischen sich einschließen und/oder einseitig begrenzen, erfindungsgemäß dadurch gelöst, daß bei mindestens einem der Hohlräume der Abstand zwischen Tür und Türrahmen über einen wesentlichen Teil der Erstreckung des Hohlraumes senkrecht zur Türaußenfläche durch einen aus wenigstens einem Dichtband bestehenden bandförmigen akustischen Absorber im wesentlichen ausgefüllt ist und der Absorber in seinem örtlichen Querschnitt dem Querschnittsverlauf des Hohlraums angepaßt und am Umfang der Tür oder im Türrahmen befestigt ist.

Der Absorber kann bei einer Reihe von Anwendungsfällen - insbesondere bei schmalen Hohlräumen - zwar als einzelnes Dichtband seine Aufgabe hervorragend lösen, bevorzugt besteht jedoch der Absorber aus zwei Dichtbändern, von denen dann ein Dichtband am Umfang der Tür und das andere Dichtband im Türrahmen befestigt ist. Die Befestigung kann beispielsweise durch Kleben, besonders vorteilhaft durch einen ohne Materialzerstörung wiederholt lösbaren Haftkleber, erfolgen. Als besonders günstig hat sich dabei eine Form der zusammen den Absorber bildenden Dichtbänder gezeigt, bei der im Querschnitt die Begrenzungslinien der einander zugekehrten Oberflächen einander entsprechen und bei geschlossener Tür im wesentlichen parallel zueinander verlaufen. Das für denselben Fahrzeugteil (Tür oder Rahmen) wie die Dichtlippe bestimmte Dichtband kann vorteilhaft auch mit der Dichtlippe zu einem Band zusammengefaßt werden.

Überraschend hat sich eine Bemessung der Absorber als besonders vorteilhaft gezeigt, bei der die Dichtbänder des an den umlaufenden Hohlraum angepaßten Absorbers beim Schließen der Tür im wesentlichen nicht zusammengedrückt oder sonstwie deformiert werden. Bei einem aus zwei Dichtbändern bestehenden Absorber besteht hierzu bevorzugt zwischen den einander zugekehrten Oberflächen der Dichtbänder - im Querschnitt gesehen - ein geringfügiger, im wesentlichen gleichbleibender Abstand. Die Bemessung des Abstands erfolgt mit besonderem Vorteil so, daß bei geschlossener Tür die beiden Dichtbänder des Absorbers den von diesem eingenommenen Hohlraum zu weniger als 100 %, vorzugsweise zu ca. 90 bis 95 % ausfüllen.

Die Querschnittsform des Absorbers kann in weitem Rahmen variieren. Bedingung ist dabei; daß im Querschnitt gesehen die Formen der einander zugekehrten Oberflächen sich im vorhergehend erläuterten Sinne entsprechen. Als besonders vorteilhaft haben sich Querschnittsformen erwiesen, bei denen die einander zugekehrten im wesentlichen parallel zueinander verlaufenden Begrenzungslinien der Dichtbänder mindestens einmal, vorzugsweise mehrfach ihre Verlaufsrichtung ändern.

Die Dichtbänder bestehen aus einem der bekannten akustisch wirksamen Werkstoffe wie beispielsweise Schaumstoff, insbesondere offenporigem Schaumstoff, Filz oder auch Vlies, wobei die letztgenannten vorteilhaft hydrophob ausgerüstet werden. Bei Verwendung eines offenporigen Schaumstoffs sollen bevorzugt mindestens die nach der Befestigung freiliegenden Oberflächen der Dichtbänder, besser die gesamte Oberfläche, wasserdicht verhautet sein. Statt dessen können die Oberflächen, mindestens die nach der Befestigung freiliegenden Oberflächen der aus einem offenporigen Schaumstoff bestehenden Dichtbänder auch mit einer aufkaschierten dünnen Folie bedeckt sein. Die Stärke dieser dünnen Folie soll bevorzugt unter ca. 40 µm und vorzugsweise unter ca. 25 µm liegen.

Anhand der in der Zeichnung dargestellten Ausführungsbeispiele wird die Erfindung erläutert.

Es zeigt:
- Fig. 1: Querschnitt durch einen zweiteiligen, mehrfach abgestuften Absorber;
- Fig. 2: im Bereich einer zwei Türen trennenden Türsäule geführter Querschnitt.
- Fig. 3: Ausschnitt aus Fig. 2 mit einem die Dichtlippe mit umfassenden Dichtband.

Zu Beginn ist darauf hinzuweisen, daß bei den erfindungsgemäß zu beruhigenden Hohlräumen zwischen Tür und Türrahmen damit gerechnet werden muß, daß deren Formen bei jedem Fahrzeugmodell verschieden sind und daß die Zeichnung im Hinblick darauf nur schematischen Charakter haben kann. Demgemäß sind auch die dargestellten Querschnittsformen nur als prinzipiell mögliche Anhaltspunkte für die konkrete Gestaltung der Absorber in der Praxis zu sehen.

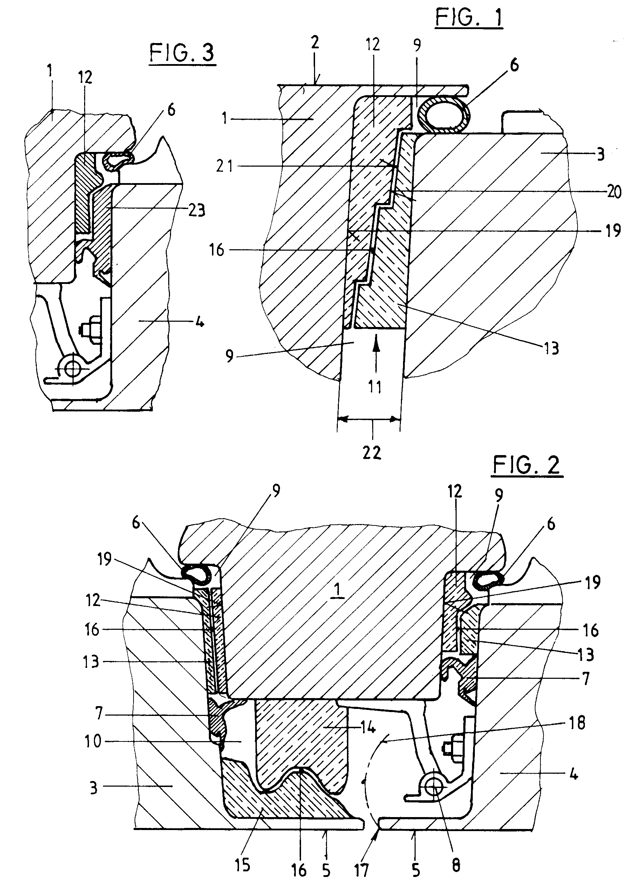

Die Fig. 1 zeigt stark vereinfacht den oben durch die Innenseite 2 der Türsäule 1 begrenzten, nur einen Teil der Türdicke umfassenden Ausschnitt eines horizontal durch die Türsäule 1 und die Tür 3 geführten Schnittes, Der Hohlraum 9 ist nach dem Fahrzeuginneren durch ein Hohlprofil 6 abgedichtet, die Abdichtung nach außen, beispielsweise eine Lippendichtung 7 entsprechend der Fig. 2, ist nicht mehr dargestellt.

Der zwischen den Dichtungen 6 und 7 eingeschlossene Hohlraum 9 wird auf einem wesentlichen Teil der Erstreckung des Hohlraumes 9 senkrecht zur Türaußenfläche 5 (Fig. 2) durch einen aus zwei Dichtbändern 12, 13 bestehenden bandförmigen akustischen Absorber 11 im wesentlichen ausgefüllt. Das Dichtband 12 ist an der Türsäule 1, das Dichtband 13 am Umfang der Tür 3 befestigt.

Die einander zugekehrten Oberflächen 20, 21 der Dichtbänder 12, 13 zeigen im Querschnitt der Fig. 1 gesehen einen für beide Oberflächen 20, 21 im wesentlichen gleichen treppenförmigen Verlauf und sind durch einen Spalt 16 voneinander getrennt. Dieser Spalt 16 kann vorteilhaft einerseits sehr eng sein - beispielsweise ca. 0,2 bis 0,5 mm - andererseits, insbesondere bei (im Querschnitt) relativ stark gewundener Führung, auch bis zu ca. 2 mm, ggf auch mehr, breit sein. Bevorzugt wird in jedem Fall eine Abstimmung der Dicke des Absorbers in Bezug auf die Breite 22 des Hohlraumes 9 derart, daß beim Schließen der Tür ein merkbares Zusammendrücken des Absorbers und insbesondere ein Schleifen der Oberflächen 20, 21 aufeinander vermieden wird. Insbesondere ist auch bei der Gestaltung der Oberflächen 20, 21 der Dichtbänder darauf zu achten, daß sich diese beim Öffnen und schließen nicht gegenseitig deformieren, sondern sich sauber voneinander abheben bzw. sich ohne Deformation ineinanderfügen.

Auch die Fig. 2 zeigt einen Ausschnitt eines horizontal durch die Türsäule 1 geführten, die Türdicke umfassenden Schnittes. Sie enthält drei unterschiedlich ausgeführte, jeweils aus zwei Dichtbändern 12, 13 bzw. 14, 15 bestehende erfindungsgemäße Absorber, von denen zwei in von Dichtstreifen 6, 7 begrenzten Hohlräumen 9 liegen und der dritte in einem nach außen offenen Hohlraum 10 untergebracht ist.

Die einfachste Ausführung zeigt der in dem in der Zeichnung links von der Türsäule 1 vorhandenen, von den Dichtstreifen 6, 7 seitlich begrenzten Hohlraum 9 angeordnete Absorber 11, der aus zwei Dichtbändern 12, 13 mit im wesentlichen rechteckigem Querschnitt besteht. Zwischen den Dichtbändern 12, 13 ist ein enger Spalt 16 gelassen. Die Wirkung dieses Absorbers 11 kann mit praktisch dem gleichen Erfolg auch durch nur ein - beispielsweise an dem Rahmen 19 befestigtes - Dichtband 12 erreicht werden.

Auch der auf der rechten Seite der Türsäule 1 vorgesehene, ebenfalls aus zwei Dichtbändern 12, 13 bestehende Absorber 11 ist relativ einfach aufgebaut, der Spalt 16 zeigt hier im Querschnitt jedoch eine leicht gebogene Form. Es ist leicht zu erkennen, daß sich hier das Dichtband 13 beim Schwenken der Tür 4 um das Scharnier 8 auch bei besonders engem Spalt 16 leicht von dem Dichtband 12 abhebt und beim Schließen der Tür 4 auch wieder in die Rundung der Oberfläche des Bandes 12 einlegt. Die Fig. 3 zeigt hierzu in einem Ausschnitt aus Fig. 2 ein Dichtband 23, das mit der bekannten, in den meisten Fällen an der Tür befestigten Lippendichtung 7 zusammen ein Teil bildet und in geeigneten Fällen eine wesentlich vereinfachte Anbringung bedeuten kann.

Der dritte Absorber 11 ist in dem an der Außenseite der Türsäule 1 zwischen dieser und den Türrändern gebildeten, nach innen durch die Dichtlippen 7 abgeschlossenen, nach außen offenen Hohlraum 10 untergebracht. Bedingt durch die Unterbringung der Türscharniere 8 ist dieser Hohlraum relativ tief und vielfach Quelle besonders störender Geräusche. Wegen der in diesen Hohlraum 10 hinein geführten Schwenkbewegung der Hinterkante 17 der Tür 4 (s. strichpunktiert angedeuteten Schwenkkreis 18) steht zur Anordnung eines Absorbers nur der zur linken Tür 3 hin gelegene Teil des Hohlraumes 10 zur Verfügung.

Um die durch die Scharniere bedingte Tiefe des Hohlraumes 10 zu überbrücken sind die beiden den Absorber bildenden Dichtbänder 14, 15 relativ dick. Die einander gegenüberliegenden Oberflächen zeigen einen rel. stark strukturierten Querschnitt mit parallel zum Türrand verlaufenden Stegen und Nuten, die zu einem stark gebogenen Verlauf des zwischen den Oberflächen vorhandenen Spalts führen. Von besonderem Vorteil kann ggf. eine noch stärkere Strukturierung mit beispielsweise stärker ausgeprägten Stegen und Nuten oder/und mit mehr stegen und Nuten nebeneinander sein. Besonders günstig ist auch eine Querschnittsform der sich gegenüberliegenden Oberflächen, bei denen der zwischen ihnen vorhandene Spalt die Form einer unstetig verlaufenden mehrfach gebogenen Kurve zeigt.

Insgesamt sind vielfältige Formen des Verlaufs der gegeneinander stehenden Oberflächen möglich. So kann beispielsweise auch der Spalt des in Fig. 2 linken Absorbers statt, wie in der Darstellung geradlinig, auch in - wenn auch durch die örtlichen Gegebenheiten bedingt flacher - Mäanderform verlaufen, was zu einer besseren Wirksamkeit führen kann. Insgesamt hat sich gezeigt, daß bereits mit einfach geformten erfindungsgemäßen Absorbern eine wesentliche Verbesserung der im Stand der Technik bestehenden Verhältnisse erreichbar ist.

### BEZUGSZEICHENLISTE

- 1: Türsäule
- 2: Säuleninnenseite
- 3: Tür
- 4: Tür
- 5: Türaußenseite
- 6: Hohlprofil, Dichtstreifen
- 7: Lippendichtung, Dichtstreifen
- 8: Türscharnier
- 9: Hohlraum
- 10: Hohlraum
- 11: Absorber
- 12: Dichtband
- 13: Dichtband
- 14: Dichtband
- 15: Dichtband
- 16: Abstand
- 17: Türhinterkante
- 18: Schwenkkreis
- 19: Türrahmen
- 20: Bandoberfläche, Oberfläche
- 21: Bandoberfläche, Oberfläche
- 22: Breite, Abstand
- 23: Abdichtband, Dichtband

## Patentansprüche

1. Türabdichtung an Kraftfahrzeugen, insbesondere an Personenkraftfahrzeugen, bei denen die einzelne Tür mit je einem umlaufenden, als Lippendichtung oder biegeweiches Hohlprofil ausgebildeten Dichtstreifen auf dem inneren Türrand und in dem Türrahmen ausgerüstet ist, wobei die Dichtstreifen zwischen Tür und Türrahmen umlaufende Hohlräume zwischen sich einschließen und/oder einseitig begrenzen,
dadurch gekennzeichnet, daß
bei mindestens einem der Hohlräume (9. 10) der Abstand zwischen Tür (3; 4) und Türrahmen (19) über einen wesentlichen Teil der Erstreckung des Hohlraumes (9; 10) senkrecht zur Türaußenfläche (5) durch einen aus wenigstens einem Dichtband (12 - 15) bestehenden bandförmigen akustischen Absorber (11) im wesentlichen ausgefüllt ist und der Absorber (11) in seinem örtlichen Querschnitt dem Querschnittsverlauf des Hohlraums (9; 10) angepaßt und am Umfang der Tür (3; 4) oder im Türrahmen (19) befestigt ist.

2. Türabdichtung nach Anspruch 1,
dadurch gekennzeichnet, daß
der Absorber (11) aus zwei Dichtbändern (12, 13; 14, 15) besteht,
daß die Querschnittskonturen der einander zugekehrten Oberflächen (20, 21) der Dichtbänder (12 - 15) einander entsprechen und
daß ein Dichtband (13; 15) am Umfang der Tür (3; 4) und das andere Dichtband (12; 14) im Türrahmen (19) befestigt, vorzugsweise festgeklebt ist.

3. Türabdichtung nach Anspruch 2,
dadurch gekennzeichnet, daß
ein Dichtband des zweiteiligen Absorbers (11) mit der Lippendichtung (7) zu einem Abdichtband (23) zusammengefaßt ist.

4. Türabdichtung nach Anspruch 2 oder 3,
dadurch gekennzeichnet, daß
das Dichtband (12 - 15, 16) durch einen ohne Materialzerstörung lösbaren Haftkleber befestigt ist.

5. Türabdichtung nach einem der Ansprüche 1 bis 4,
dadurch gekennzeichnet, daß
der Absorber (11) an die zwischen Tür (3; 4) und Türrahmen (19) gemessene Breite (22) des umlaufenden Hohlraums (9; 10) derart angepaßt ist, daß das Dichtband bzw. die Dichtbänder (12 - 15) beim Schliefen der Tür (3; 4) im wesentlichen nicht deformiert wird (werden).

6. Türabdichtung nach Anspruch 5,
dadurch gekennzeichnet, daß
der Absorber (11), insbesondere der aus zwei Dichtbändern (12 - 15) bestehende Absorber (11), bei geschlossener Tür (3; 4) den von ihm eingenommenen Abschnitt des Hohlraums (9; 10) zu weniger als 100 %, vorzugsweise zu ca. 90 bis 95 % ausfüllt.

7. Türabdichtung nach Anspruch 6,
dadurch gekennzeichnet, daß
bei einem aus zwei Dichtbändern (12, 13; 14, 15) gebildeten Absorber (11) die einander zugekehrten Oberflächen (20, 21) der Dichtbänder (12, 13; 14, 15) - im Querschnitt gesehen - mit einem geringfügigen, im wesentlichen gleichbleibenden Abstand (16) zueinander verlaufen.

8. Türabdichtung nach Anspruch 7,
dadurch gekennzeichnet, daß
im Querschnitt gesehen die Begrenzungslinien der einander zugekehrten im wesentlichen parallel zueinander verlaufenden Oberflächen (20, 21) der Dichtbänder (12, 13; 14, 15) mindestens einmal, vorzugsweise mehrfach abgeknickt bzw. abgebogen sind. (s. Fig. 1)

9. Türabdichtung nach einem der Ansprüche 1 bis 8,
dadurch gekennzeichnet, daß
die Dichtbänder (12 - 15) aus einem offenporigen, mindestens auf den nach der Befestigung freiliegenden Oberflächen, vorzugsweise auf der gesamten Oberfläche verhauteten Schaumstoff bestehen.

10. Türabdichtung nach einem der Ansprüche 1 bis 8,
dadurch gekennzeichnet, daß
die Oberflächen, mindestens die nach der Befestigung freiliegenden Oberflächen der aus einem offenporigen Schaumstoff bestehenden Dichtbänder (12 - 15) mit einer aufkaschierten dünnen Folie bedeckt sind.

11. Türabdichtung nach Anspruch 10,
dadurch gekennzeichnet, daß
die Kaschierfolie eine Dicke < 40 µm, vorzugsweise < 25 µm hat.

## Geänderte Patentansprüche

### Geänderte Patentansprüche gemäss Regel 86(2) EPÜ.

1. Türabdichtung an Kraftfahrzeugen, insbesondere an Personenkraftfahrzeugen, bei denen die einzelne Tür mit je einem umlaufenden, als Lippendichtung oder biegeweiches Hohlprofil ausgebildeten Dichtstreifen auf dem inneren Türrand und in dem Türrahmen ausgerüstet ist, wobei die Dichtstreifen zwischen Tür und Türrahmen umlaufende Hohlräume zwischen sich einschließen,
dadurch gekennzeichnet, daß
bei mindestens einem der Hohlräume (9, 10) der Abstand zwischen Tür (3; 4) und Türrahmen (19) über einen wesentlichen Teil der Erstreckung des Hohlraumes (9; 10) senkrecht zur Türaußenfläche (5) durch einen aus wenigstens einem Dichtband (12 - 15) bestehenden bandförmigen akustischen Absorber (11) im wesentlichen ausgefüllt ist,
daß der Absorber (11) in seinem örtlichen Querschnitt dem Querschnittsverlauf des Hohlraums (9; 10) angeglichen und am Umfang der Tür (3; 4) und/oder im Türrahmen (19) befestigt sowie an die zwischen Tür (3; 4) und Türrahmen (19) gemessene Breite (22) des umlaufenden Hohlraums (9; 10) derart angepaßt ist, daß das Dichtband bzw. die Dichtbänder (12 - 15) beim Schließen der Tür (3; 4) nicht deformiert wird (werden).

2. Türabdichtung nach Anspruch 1,
dadurch gekennzeichnet, daß
der Absorber (11) aus zwei Dichtbändern (12, 13; 14, 15) besteht,
daß die Querschnittskonturen der einander zugekehrten Oberflächen (20, 21) der Dichtbänder (12 - 15) einander entsprechen und
daß ein Dichtband (13; 15) am Umfang der Tür (3; 4) und das andere Dichtband (12; 14) im Türrahmen (19) befestigt, vorzugsweise festgeklebt ist.

3. Türabdichtung nach Anspruch 1 oder 2,
dadurch gekennzeichnet, daß
der Absorber (11) bei geschlossener Tür (3; 4) den von ihm eingenommenen Abschnitt des Hohlraumes (9; 10) zu ca. 90 bis 95 % ausfüllt.

4. Türabdichtung nach Anspruch 3,
dadurch gekennzeichnet, daß
bei einem aus zwei Dichtbändern (12, 13; 14, 15) gebildeten Absorber (11) die einander zugekehrten Oberflächen (20, 21) der Dichtbänder (12, 13; 14, 15) - im Querschnitt gesehenmit einem geringfügigen, im wesentlichen gleichbleibenden Abstand (16) zueinander verlaufen.

5. Türabdichtung nach einem der Ansprüche 1 bis 4,
dadurch gekennzeichnet, daß
im Querschnitt gesehen die Begrenzungslinien der einander zugekehrten im wesentlichen parallel zueinander verlaufenden Oberflächen (20, 21) der Dichtbänder (12, 13; 14, 15) mindestens einmal, vorzugsweise mehrfach abgeknickt bzw. abgebogen sind. (s. Fig. 1)

6. Türabdichtung nach einem der Ansprüche 1 bis 5
dadurch gekennzeichnet, daß
ein Dichtband des zweiteiligen Absorbers (11) mit der Lippendichtung (7) zu einem Abdichtband (23) zusammengefaßt ist.

7. Türabdichtung nach einem der Ansprüche 1 bis 6,
dadurch gekennzeichnet, daß
die Dichtbänder (12 - 15, 23) durch einen ohne Materialzerstörung lösbaren Haftkleber befestigt sind.

8. Türabdichtung nach einem der Ansprüche 1 bis 7,
dadurch gekennzeichnet, daß
die Dichtbänder (12 -15) aus einem offenporigen, mindestens auf den nach der Befestigung freiliegenden Oberflächen, vorzugsweise auf der gesamten Oberfläche verhauteten Schaumstoff bestehen.

9. Türabdichtung nach einem der Ansprüche 1 bis 7,
dadurch gekennzeichnet, daß
die Oberflächen, mindestens die nach der Befestigung freiliegenden Oberflächen der aus einem offenporigen Schaumstoff bestehenden Dichtbänder (12 - 15) mit einer aufkaschierten dünnen Folie bedeckt sind.

10. Türabdichtung nach Anspruch 9,
dadurch gekennzeichnet, daß
die Kaschierfolie eine Dicke < 40 µm, vorzugsweise < 25 µm hat.
